Europäisches Patentamt

European Patent Office

Office européen des brevets

(11) Publication number: **0 455 984 A1**

# EUROPEAN PATENT APPLICATION

(21) Application number: 91105293.4

(22) Date of filing: 03.04.91

(51) Int. Cl.5: **G01D 3/02**

(30) Priority: 08.05.90 US 520438

(43) Date of publication of application:
**13.11.91 Bulletin 91/46**

(84) Designated Contracting States:
**AT BE CH DE DK ES FR GB GR IT LI LU NL SE**

(71) Applicant: **THE WARNER & SWASEY COMPANY**
**11000 Cedar Avenue**
**Cleveland Ohio 44106(US)**

(72) Inventor: **Brandstetter, Robert W.**
**418 Cherrywood Drive**
**Fairborn, Ohio 45324-4015(US)**
Inventor: **Darkow, David J.**
**531 Chippelgate**
**Centerville, Ohio(US)**
Inventor: **Sink, James**
**762 Browning Avenue**
**Englewood, Ohio(US)**

(74) Representative: **Schaumburg, Thoenes & Englaender**
**Mauerkircherstrasse 31 Postfach 86 07 48**
**W-8000 München 86(DE)**

(54) Coordinate measuring machine with improved interpolation circuit.

(57) An interpolation circuit and process is described incorporated into a coordinate measuring machine having optical displacement transducers generating quadrature analog output signals as a reading head traverses past a stationary grating. The interpolation circuit and process use high speed A/D converters to convert the analog signals to binary digital form, each combination of digitized signals applied to a read only memory to cause read out of a previously computed and stored interpolation binary digital signal value corresponding to the combination of digitized reading head output signals, the interpolation signal values correspond to the proportion of interline space traversed by the reading head. A running count of the transitions of the most significant bits of the interpolation signal value is also maintained to obtain a signal value corresponding to the total of intraline complete spaces traversed. The transition count and interpolation signals are combined to provide a signal corresponding to the total intraline and interline distance traversed by the reading head.

FIG-2

This invention concerns position shift measuring systems in which cyclically varying analog electrical signals are caused to be generated by relative displacement of two structures. Such systems have been employed extensively in coordinate measuring machines, in which a measuring probe is supported on a system of carriage and ways for movement along three orthogonal axes. The probe is caused to traverse points of interest on a workpiece, and the extent of displacement of the probe is measured to arrive at a measurment of the distance between the points on the workpiece.

The displacement has been measured by an optical distance transducer consisting of an elongated grating scale extending along each axis, with a skewed transparent grating mounted in a reading head mounted on the moving carriage moved past the grating. The reading head grating is illuminated by a lamp and optical interference generates a shadow pattern, referred to as a Moire' fringe pattern. The shadow pattern is comprised of light and dark areas that shift across the width of the gratings in precise correspondence with relative movement of the reading head and fixed grating. Alternately, a so called "Vernier fringe" method could be used, which is well known in the art, with which the present invention could also be used.

The pattern is sensed by photosensors which generate cyclically varying electrical voltages corresponding to the movement of shadow pattern and which comprise analog electrical signals recurring with each increment of displacement of the reading head, precisely corresponding to the distance between grating lines.

Such transducers are disclosed in U.S. patents 2,886,717 and 2,886,718, both issued on May 12, 1959 for "Measuring Apparatus".

Typically, the electrical signal is sinusoidal, a complete sine wave pattern generated each time a grating line is traversed. The number of sine waves is counted, usually after converting the sine wave into a square wave pulse, to determine the distance the reading head has traversed, with an interpolation value of a partial sine wave added to the count to obtain a finer resolution than the distance between grating lines.

Since the reading head may move in either direction, and since the analog signal value repeats itself within the course of each cycle, there is an inherent ambiguity in the interpolation signal value.

To resolve this ambiguity, a refinement has been utilized, in which a second electrical signal is generated, equal in magnitude to the first signal but 90° out of phase. A pair of quadrature signals is thus provided. These quadrature signals are combined to provide unique signal information linearly related to the position of the reading head along the interline space between lines in the grating scale. That is, the combination of the quadrature signals provides a linear function from which it may be determined without ambiguity at what point the reading head is in the interline space.

In order to improve resolution of the measuring machine to be finer than the distance between gratings, the analog signals have heretofore been divided electronically by applying the signals to a network of electrical resistances, creating a plurality of secondary signals, the zero crossings of which are processed in a bank of comparators and an exclusive OR network to develop a corresponding interpolation signal. This arrangement generates a pulse train, each pulse corresponding to a 1/N fraction of the signal generated by passage of the reading head across a space between each pair of grating lines. The pulses are further divided by four by counting the transitions thereof to generate an over all divide-by-(N x 4) interpolation, where N is typically 5 or 6.

For high resolution applications, increases in the degree of interpolation are theoretically possible by adding resistances and solid state devices, but this greatly increases the cost and bulk of the componentry. Also, the circuit becomes more susceptible to radiated and conducted noise, as in this scheme the number of total pulses counted increases by the interpolation factor.

In U.S. patent 4,225,931 issued on September 30, 1980 for "Interpolation Apparatus For Digital Electronic Position Measuring Instrument", there is described another arrangement for interpolating such quadrature signals. In the arrangement described therein, two sinusoidal analog output signals are converted into digital signals, and processed in a digital computer to calculate the interpolated value for each combination of the two digital output signals. The number of cycles of the analog signals are counted to establish the intra line measurement, which is combined with the interline, interpolated digital value to arrive at a signal value corresponding to the total displacement.

There are disadvantages to this approach.

The calculations must be made "on line" as the reading head traverses the grating, and since the cyclical signals are being very rapidly generated, it is difficult to develop interpolated values at this rate, at least for very fine interpolations. This approach also requires a powerful digital computer and associated interpolation algorithms.

Further, in this system the analog signals are counted directly while the interpolation process is performed on digitized signals corresponding thereto. This approach can lead to ambiguity errors when the interpolation outputs are close to zero and a signal count is to be made.

## SUMMARY OF THE INVENTION

In the present invention, each of the quadrature analog reading head output signals (X,Y) is directed to a high speed A/D converter enabling each X,Y analog signal to be converted in real time into corresponding digital values.

Each X, Y digital signal is applied to a look up table, comprised of memory addresses in a read only memory (ROM) in which is stored previously computed digital interpolation values corresponding to each combination of digital reading head output signals over the course of each cycle. For each combination of X, Y signals, a stored, previously calculated interpolation value is read out from the ROM as an 8-bit digital number.

The combination of the X,Y digital signals is thus used for a mapping function with respect to the look up table to read out a digital signal corresponding to the interpolated value of the signal cycle.

Accordingly, the reading head output signals for each unit of displacement are effectively subdivided into the number of digital values able to be read out of the ROM, and any need for real time calculations is avoided.

Transitions of the two most significant digits of the interpolated digital signals are encoded into up counts or down counts to achieve an intraline count, avoiding the potential errors referred to above. The design of the interline register bit weighting and the intraline register bit weighting are arranged to be exactly 256/1, thus allowing them to simply be directly concatenated into a total binary value without conversion operations.

The present invention has the advantage of a greatly increased resolution of such cyclical analog signals at a much lower cost than the prior art resistance network designs. Also, susceptibility to noise is reduced over prior art techniques, as the rate of signal counting is not increased by the interpolation process, i.e., only intraline transitions are counted.

At the same time, the development of interpolation signals may be achieved at a rapid rate much more easily than by the prior art interpolation process requiring "on-line" calculations in a digital computer.

The weighting of the intraline and interline registers is arranged so as to allow direct combination of their contents minimizing the required processing of the interline and intraline signals to produce an overall displacement signal.

## DESCRIPTION OF THE DRAWINGS

FIGURE 1 is a perspective view of a coordinate measuring machine incorporating a reading head signal processing circuit according the present invention.

FIGURE 2 is a block diagram of the reading head signal processing circuit according to the present invention.

FIGURE 3 is a simplified state diagram for the circuit shown in FIGURE 2.

FIGURE 4 is a flow chart depicting the programming for calculating the interpolation signal values.

FIGURE 5 is a sample X, Y plot on a diagram illustrating the calculation of interpolation signal values.

## DETAILED DESCRIPTION

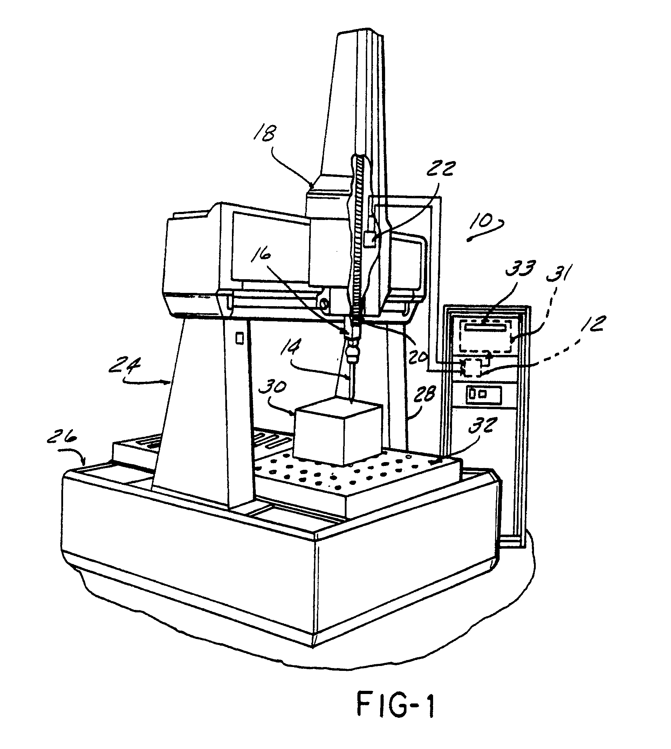

FIGURE 1 shows a coordinate measuring machine (CMM) 10 as an example of a position measuring device incorporating a reading head signal processing circuit 12 according to the present invention. The CMM 10 may be configured in various forms, the illustrative example a machine described in detail in U.S. patent 4,682,418 issued on July 28, 1987 for a "Coordinate Measuring Machine".

A probe 14 is attached to a probe shaft 16 supported for vertical movement on a carriage 18. The probe shaft 16 has a grating 20 affixed thereto moving past a reading head 22 mounted to the carriage 18. The carriage 18 is mounted for horizontal movement on a second carriage 24 in turn mounted for horizontal movement in an orthogonal direction on a base 26.

Similar grating - reading head arrangements (not shown) are provided for each carriage 18 and 24 so as to enable generation of electrical signals corresponding to movement along each orthogonal axis in the manner well known in the art.

Thus, as the tip 28 of the probe 14 is moved between points on a workpiece 30 supported on a table 32, the extent of movement is measured to generate a signal corresponding to the distance between the points on the workpiece 30.

3

As described above, a well known optical distance transducer technology for developing signals corresponding to the extent of movement of each member involves the use of an array of photo sensors detecting a Moire' fringe shadow pattern created by a small section of grating carried by the reading head 22 and slightly skewed with respect to the corresponding main grating 20 affixed to one of the machine members. The present invention would apply equally well to "Vernier" type seals, also well known in the art.

The reading head 22 contains an array of photosensors (not shown) detecting the shadow pattern so as to generate a pair of electrical reading head output signals which each vary sinusoidally, but are 90° out-of phase with each other, providing quadrature signals. A complete cycle of these signals occurs upon the reading head traversing a single grating interline space.

These signals are processed in the reading head signal processing circuitry 12, and the machine main electronic circuitry 31 receives the processed reading head output signals and processes the same for use in a suitable utilization device such as a display 33 showing measurement units corresponding to the reading head signal. The main electronic circuitry 31 may include or comprise a main computer for processing the transducer signals.

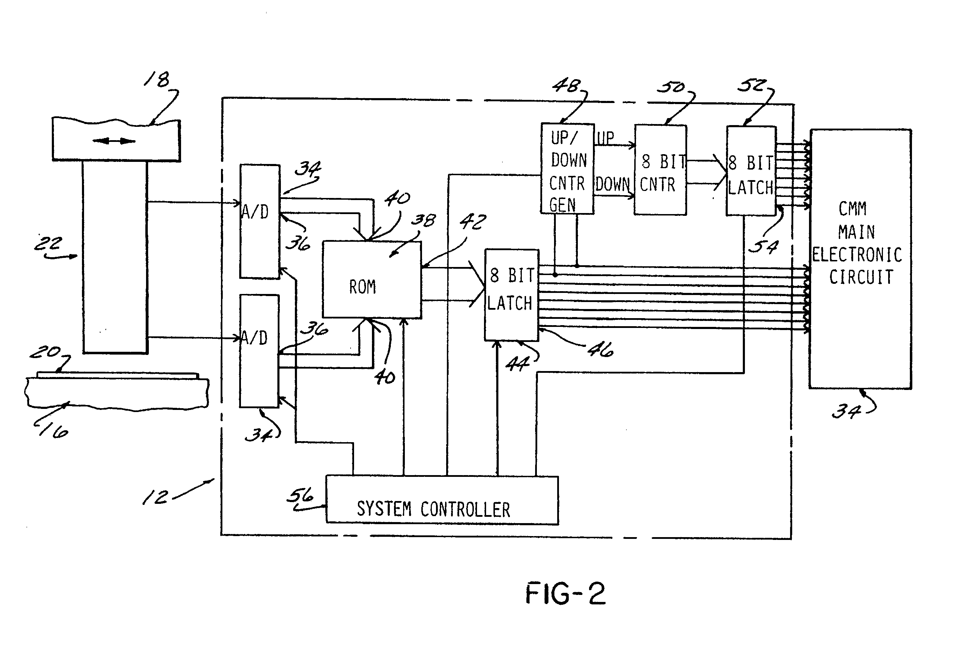

FIGURE 2 shows the reading head signal processing circuitry 12 according to the present invention.

Two analog signals X, Y are generated by means carried on the reading head 22. This signal generating means here takes the form of the output from a pair of photosensors 23 carried on the reading head 22. An array of four photosensors is commonly employed, the outputs combined to generate two signals, for the purpose of reducing common mode errors as will be understood by those skilled in the art. The reading head analog output signals are each directed to an associated A/D converter 34, each having an 8 bit output terminal 36. Each A/D converter is of the "flash" type, i.e., capable of converting at a rate of $2 \times 10^5$ conversions per second in order to allow continuous processing of the analog signals as the reading head is traversing at maximum designed for speeds. Such flash A/D converters are commercially available.

The sinsusoidal, 90° out of phase analog signals X, Y, are thus continuously converted into corresponding binary digital signals at the output terminal 36.

Each binary digital output signal is read by a read only memory or ROM 38, having a total of 16 input terminals, which are split into two 8 bit input terminals 40 and one 8 bit output terminal 42. Stated another way, the X, Y, combination corresponds to a 16 bit input to the ROM 38 so that in effect a direct decoding of the X, Y combination is achieved.

The ROM 38 has stored in it at various memory addresses each binary digital signal values 0-225, capable of being read out at the output terminal 42 from various memory addresses. An interpolation factor is thereby provided by the 256 sequential binary digital signals capable of being read at the output terminal 42 of the ROM.

The binary digital form of the reading head output signals, X, Y, are utilized for a mapping or decoding function to cause an appropriate binary digital signal value to be read out of a memory address to the output terminal 42.

Each combination of the X, Y output signals corresponds to a point within the interline space of the gratings over the complete range of possible output signals.

That is, each combination of digitized reading head output signals will correspond to one of the 0-255 binary digital signals at the ROM output terminal 42, and the sequential progression of these signals thereby linearly corresponds to a subincrement of the interline space.

Accordingly, a plurality of binary digital signal values are stored in appropriate memory addresses of combined X, Y signals so as to be output at the output terminal 42 for whatever combination of X, Y signals are applied at the input signals. The binary digital signal at the output terminal 42 will therefore comprise an interpolation or interline binary digital signal corresponding to the arc whose tangent is formed by intersecting the Lissajous circle center and the X, Y signals last read which on command is read into an 8 bit latch register 44, having an 8 bit output terminal 46.

The binary digital reading head output signals X, Y may vary over a range of Lissajous circle diameters as the reading head illuminating lamp varies in brightness. However, these output signal values, even if decreased or increased by a change in lamp brightness, bear an arctan functional relationship to the interpolation signal, as described in U.S. patent 4,225,931 referenced above. Thus, a series of memory addresses may be programmed with the identical specific interpolation value corresponding to a range of binary digital output signal combination (for various Lissajous circle "diameters") able to be generated by the A/D converters 34 arrived at as by calculations specifically described below.

Transitions of the two most significant bits of the binary digital interpolation signal at the output terminal 46 of the latch 44 are counted by an up/down count generator 48 to obtain a running count corresponding to the intraline distance traversed by the reading head 22. As the signal value increases from 255, these two bits go from 11 to 00, and vice versa, as the signal value decreases from 0, these bits go from 00 to 11. Thus, each of these transitions may be counted up or down as appropriate in a 8 bit counter 50 to obtain a running total corresponding to the intraline distance traversed.

The running total count is periodically transmitted to an 8 bit latch register 52 having an output terminal 54.

The design of the interline register bit weighting and the intraline register bit weighting are arranged to be exactly 256/1 thus allowing them to simply be directly concatenated into a total value without conversion operations.

The intraline and interline binary digital signals are able to be directly combined by the machine main electronic circuitry 34 for display in length measurement units or other further use in the manner well known in the art.

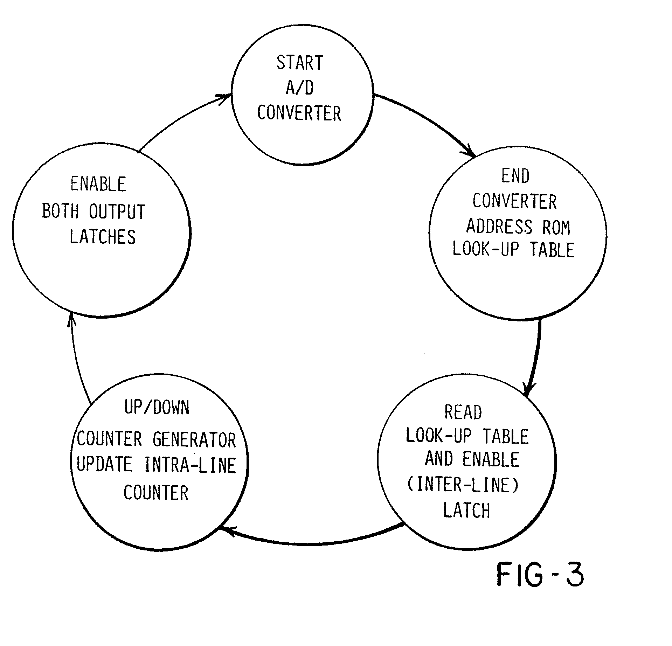

As will be appreciated by those skilled in the art, the operation of the above devices must be properly timed, and a system controller 56 is required for such purpose. FIGURE 3 is a simplified state diagram to be accomplished by such a controller 56.

The calculation of the interpolation signal corresponding to each combination of analog signals over the range of these values may advantageously be accomplished off line in a suitably programmed digital computer.

For each amplitude of X, Y reading head signals, a Lissajous circle will be created by an X-Y plot of these signals over the course of a complete cycle by dividing the angles of the circle into the number of equal arc lengths corresponding to the interpolation factor, the angle - for each X, Y combination can be related to each bit of the 256 possible interpolation values as a method of carrying out this calculation.

The arc tan function relating the combination of X, Y signals to the linear interpolation will be ARCTAN 2 (X,Y), which calculates a 4-quadrant angle such that both X' and Y' axis sign information ( + or -) is used to give an answer that is in a range of from $[0^{\circ} < \theta < 360^{\circ}]$. Once the value is determined dimensionally in degrees, it must be scaled (multiplied by 256/360) to get an integer binary value.

Assumptions to be made about the table include:

1. Values across the columns (across the horizontal axes) of the look-up table correspond to the maximum range of the 0 degree reading head signal i.e. the X signal, where a value of 0 corresponds to -2.5Vdc,a value of "127" corresponds to 0 Vdc, and a value of 255 corresponds to +2.5Vdc.

2. Values across the rows (across the vertical axes) of the look-up table correspond to the $90^{\circ}$ reading head signal, i.e. the Y signal with a value of 0 corresponds to -2.5Vdc, a value of 127 corresponds to 0Vdc and a value of 255 corresponds to +2.5Vdc.

3. The values to be placed in i.e., programmed into, the "look-up" table correspond to the angle of the X-Y point on the Lissajous circle from the +X' axes (from the 3:00 reference point) on the circle. This corresponds to the actual displacement of the axis along the grating scale.

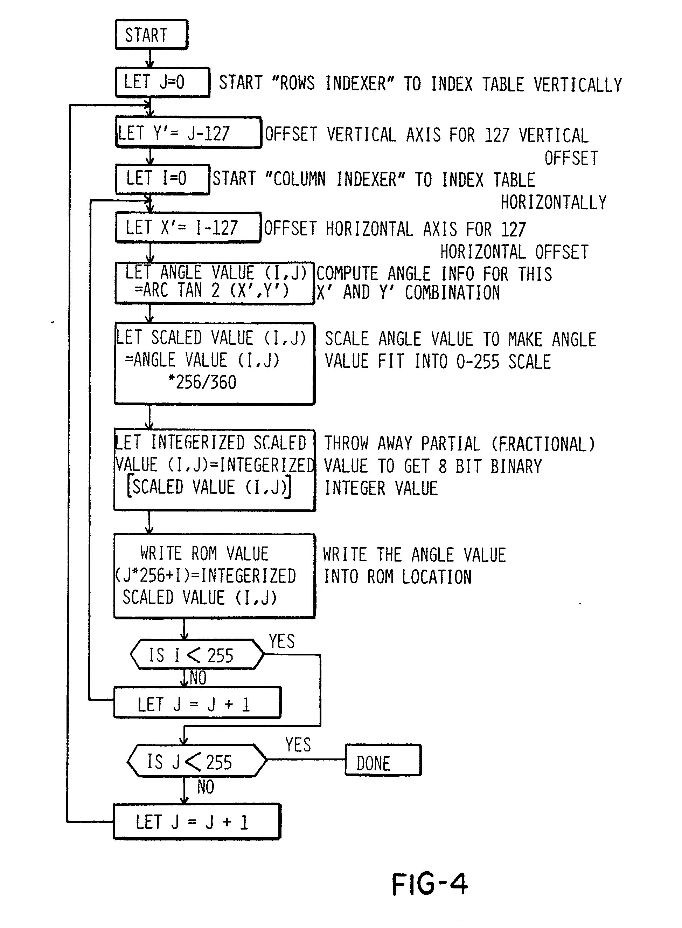

FIGURE 4 is a flow chart for a particular program for calculating these values according to this technique.

A BASIC program listing written according to this flow chart is as follows in which I, J are the A/D converter output values input to each terminal of the ROM:

```
10   OPEN "O", #1, "A:EPROM512.dat"
20   FOR I = 0 TO 255
```

```
30    PRINT I
40          YA = (I - 128)  / 128
50          FOR J = 0 TO 225
60          XA = (J - 128)  / 128
70                IF (YA >= 0 AND XA >= 0) THAN ADDA = 0
80                IF (YA < 0 AND XA > 0) THAN ADDA = 360
90                IF (YA >= 0 AND XA < 0) THAN ADDA = 180
100               IF (YA < 0 AND XA <= 0) THAN ADDA = 180
110               IF ((XA > 0) OR (XA < 0)) THAN ANGLE1 = ATN(YA / XA)
120               IF (XA = 0) THAN ANGLE1 = 90 * 3.14159 / 180
130               ANGLE = INT((ADDA + (ANGLE1 * 180 / 3.14159)) * 256 / 360
140               AMPX=I-128
150               AMPY=Y-128
160               HYP=(AMPX^2+AMPY^2) ^.5
170               IF (HYP<32) THEN ANGLE = 0: ADDA = O
180               PRINT #1, USING "!"; CHR$(ANGLE);
190                   REM   PRINT  USING "!";CHR$(ANGLE);
200         NEXT J
210   NEXT I
220   CLOSE #1
230   END
```

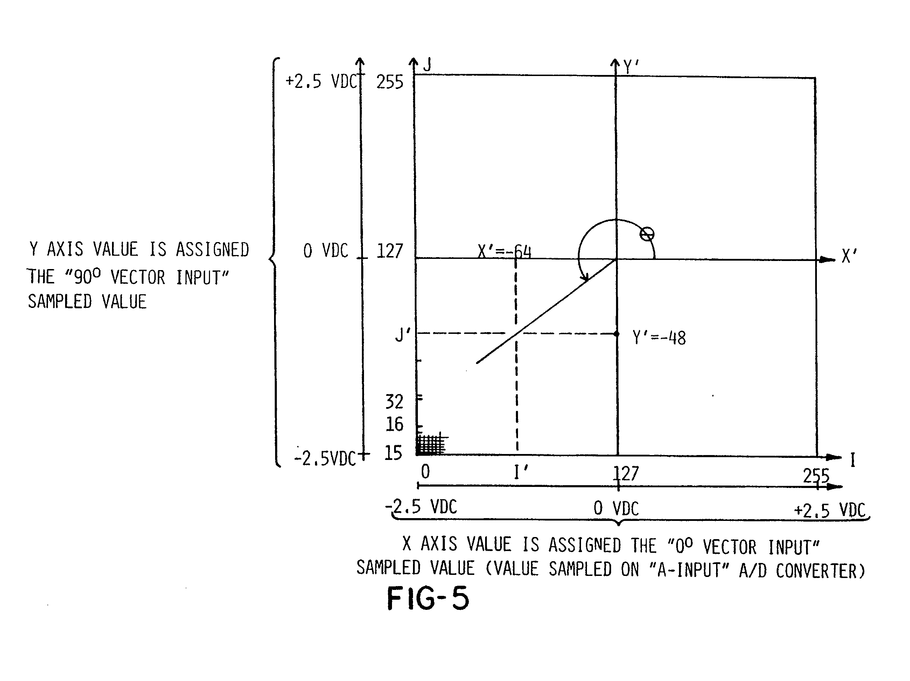

FIGURE 5 is a diagram depicting a phasor angle $\theta$ for a illustrative X' value of -64 and a Y' value of -48.

The circuit and process of the present invention may also be used in position measuring devices other than the coordinate measuring machine shown, i.e.; linear and angular resolvers and encoders, etc.

**Claims**

1. In combination with a coordinate measuring machine (10), including a probe (14) mounted for bidirectional movement and signal generator means (23) generating a pair of analog electrical output signals, each signal cyclically varying in magnitude as said probe (14) is moved in either direction, said cycle precisely related to an increment of said probe movement in either direction, said pair of analog signals each repeating over the course of each cycle but out of phase with each other; interpolation means (12) generating interpolation signals corresponding to the position of said probe (14) within an increment; machine electronic circuit means (31) responsive to said analog and interpolation signals to provide an output (33) indicative of said probe displacement;

   said interpolation means (12) including A/D converter means (34) converting each of said analog signals into a corresponding binary digital signal;

   up/down counter means (48) providing a cumulative signal count corresponding to each cycle of said output signals;

   the improvement wherein said interpolation means (12) includes memory-decoding means (38) having stored therein previously determined binary digital signal interpolation values corresponding to each combination of the binary digital values of said analog signals occurring during a complete cycle, said memory-decoder means (38) having input terminal means (40) receiving said binary digital form of each output signal and means (42, 46) controllably outputting said stored binary digital values to said machine electronic circuit means (31) when the corresponding binary digital output signal values are presented to said input terminal means (40); said interpolated signal values and said up/down signal count combined in said machine electronic circuit means (31) to provide said probe displacement indicative output.

2. The coordinate measuring machine (10) according to claim 1 wherein said memory decoder means (38) comprises a read only memory (30) having an 8 bit binary output (42), with a minimum to maximum stored interpolation signal values of 0 - 255.

3. The coordinate measuring machine (10) according to claim 2 wherein said read only memory has a 16 bit input, and wherein said binary digital signals corresponding to each analog signal are applied to an 8 bit segment of said 16 bit input, whereby the combination of said signals is directly decoded by selection of a memory address of said read only memory (30).

4. The coordinate measuring machine (10) according to anyone of claims 1 to 3 wherein said up/down counter (48) is responsive to transitions of the two most significant digits of said interpolation signal values in particular directions to obtain said up/down signal count.

6

5. The coordinate measuring machine (10) according to anyone of claims 1 to 4 wherein said output signals are sinusoidal and 90° out of phase with each other; said signal generating means (23) providing thereby a pair of quadrature analog signals.

6. The coordinate measuring machine (10) according to claim 4 or 5 further including an 8 bit interline register (52) and wherein said output of said memory decoder means is latched into said interline register (52) and also including an 8 bit intraline register (44) and wherein the contents of said up/down counter (50) is latched into said interline register (44), and weighting the relative value of the interline register to the intraline register to be 256/1 thus permitting simple concatenation of the two 8 bit registers to form a single 16 bit position value.

7. An improved process for interpolating quadrature analog output signals generated by a coordinate measuring machine (10) in correspondence with displacement of a bidirectionally movable measuring probe (14) included in said measuring machine coordinate, said analog signals each cyclically recurring during movement of said probe (14) through an increment, said process including the steps of counting each completed cycle of said analog signals to establish a running total corresponding to the total number of increments traversed, and interpolating the value of a partially completed signals cycle to obtain a displacement resolution finer than the distance of said increment, combining said running count and said interpolation to obtain a signal corresponding to the total measured displacement of said probe (14);
said interpolation step including the steps of converting each of said analog output signals into binary digital output signals as said output signals are generated;
the improvement comprising the steps of:
establishing a linear series of digital signal values, the total number of which representing an interpolation factor;
determining the combination of said converted binary digital output signals over the range of binary digital output signal values which corresponds to each digital signal value in said linear series;
storing each linear digital value in a memory (38);
reading out from memory (38) a corresponding linear digital signal value in response to development of each combination of binary digital output signals generated during each increment of movement, whereby an interpolation signal comprised of said read out digital signal value is provided.

8. The process according to claim 7 further including the step of counting the transitions of the two most significant digits of said interpolation signal value from 11 to 00 as movement to a completed cycle and adding one count to a running total of previously counted completed cycles obtaining by counting each of said transitions, and counting said transitions from 00 to 11 as reverse movement from a completed cycle and subtracting one count from said running total of previously counted completed cycles.

9. A position measuring device (10), including a reading head (22) mounted for bidirectional movement and signal generator means (23) included in said reading head (22) generating a pair of analog electrical output signals as said reading head (22) moves in either direction, each signal cyclically varying in magnitude as said reading head (22) is moved in either direction, said cycle precisely related to an increment of said reading head (22) movement in either direction, said pair of analog signals each repeating over the course of each cycle but out of phase with each other; interpolation means (12) generating interpolation signals corresponding to the position of said reading head (22) within an increment; electronic circuit means (31) responsive to said analog and interpolation signals to provide an output (33) indicative of said reading head displacement;
said interpolation means (12) including A/D converter means (34) converting each of said analog signals into a corresponding binary digital signal;
up/down counter means (48) providing a cumulative signal count corresponding to each cycle of said output signals;
the improvement wherein said interpolation means (12) includes memory-decoding means (38) having stored therein previously determined binary digital signal interpolations values corresponding to each combination of the binary digital values of said analog signals occurring during a complete cycle, said memory-decoder means (38) having input terminal means (40) receiving said binary digital form of each output signal and means (42, 46) outputting said stored binary digital values to said electronic circuit means (31) when the corresponding binary digital output signal values are presented to said input terminal means (40); said interpolated signal values and said up/down signal count combined in

7

said electronic circuit means (31) to provide said probe displacement indicative output.

10. An improved process for interpolating quadrature analog output signals, said analog signals each cyclically recurring, said process including the steps of counting each completed cycle of said analog signals to establish a running total, and interpolating the value of a partially completed signal cycle to obtain a signal resolution finer than each signal cycle, combining said running count and said interpolation to obtain a signal corresponding to the total of the signal cycles;

said interpolation step including the steps of converting each of said analog output signals into binary digital output signals as said output signals are generated;

the improvement comprising the steps of:

establishing a linear series of digital signal values, the total number of which representing an interpolation factor;

determining the combination of said converted binary digital output signals over the range of binary digital output signal values which corresponds to each digital signal value in said linear series;

storing each linear digital value in a memory (38);

reading out from memory (38) a corresponding linear digital signal value in response to development of each combination of binary digital output signals generated during each increment of movement, whereby an interpolation signal comprised of said read out digital signal value is provided.

FIG-1

FIG-2

FIG-3

EP 0 455 984 A1

START

LET J=0    START "ROWS INDEXER" TO INDEX TABLE VERTICALLY

LET Y'= J-127    OFFSET VERTICAL AXIS FOR 127 VERTICAL OFFSET

LET I=0    START "COLUMN INDEXER" TO INDEX TABLE HORIZONTALLY

LET X'= I-127    OFFSET HORIZONTAL AXIS FOR 127 HORIZONTAL OFFSET

LET ANGLE VALUE (I,J) =ARC TAN 2 (X',Y')    COMPUTE ANGLE INFO FOR THIS X' AND Y' COMBINATION

LET SCALED VALUE (I,J) =ANGLE VALUE (I,J) *256/360    SCALE ANGLE VALUE TO MAKE ANGLE VALUE FIT INTO 0-255 SCALE

LET INTEGERIZED SCALED VALUE (I,J)=INTEGERIZED [SCALED VALUE (I,J)]    THROW AWAY PARTIAL (FRACTIONAL) VALUE TO GET 8 BIT BINARY INTEGER VALUE

WRITE ROM VALUE (J*256+I)=INTEGERIZED SCALED VALUE (I,J)    WRITE THE ANGLE VALUE INTO ROM LOCATION

IS I < 255 — YES

NO

LET J = J + 1

IS J < 255 — YES — DONE

NO

LET J = J + 1

FIG-4

12

Y AXIS VALUE IS ASSIGNED
THE "90º VECTOR INPUT"
SAMPLED VALUE

X AXIS VALUE IS ASSIGNED THE "0º VECTOR INPUT"
SAMPLED VALUE (VALUE SAMPLED ON "A-INPUT" A/D CONVERTER)

## FIG-5

European
Patent Office

**EUROPEAN SEARCH
REPORT**

Application Number

**EP 91 10 5293**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 902 062  (CHAPMAN)<br>* Page 4, line 9 - page 13, line 37 * | 1-5,7-10 | G 01 D 3/02 |

TECHNICAL FIELDS
SEARCHED (Int. Cl.5)

G 01 D

The present search report has been drawn up for all claims

| Place of search | Date of completion of search | Examiner |
|---|---|---|
| The Hague | 01 August 91 | LUT K. |